# EUROPÄISCHE PATENTSCHRIFT

(11) **EP 3 268 533 B1**
(45) Veröffentlichungstag und Bekanntmachung des Hinweises auf die Patenterteilung: **20.02.2019**
(21) Anmeldenummer: 15816760.1
(22) Anmeldetag: 18.12.2015
(51) Int. Cl.: D21B 1/32

(54) **ALTPAPIERAUFLÖSUNG**
WASTE PAPER DISSOLUTION
PROCÉDÉ DE DISSOLUTION DE VIEUX PAPIER

(30) Priorität: 12.03.2015 DE 102015204460
(43) Veröffentlichungstag der Anmeldung: 17.01.2018
(73) Patentinhaber: Voith Patent GmbH, 89522 Heidenheim (DE)
(72) Erfinder: SCHUSTER, Sebastian, 88281 Schlier-Oberankenreute (DE); MÜLLER, Wolfgang, 88250 Weingarten (DE); MANNES, Wolfgang, 88213 Ravensburg-Bavendorf (DE)
(86) Internationale Anmeldenummer: PCT/EP2015/080488
(87) Internationale Veröffentlichungsnummer: WO 2016/142019

(56) Entgegenhaltungen:
- EP-A1- 0 164 428
- DE-A1- 10 132 743
- DE-C1- 3 221 788

## Beschreibung

Die Erfindung betrifft ein Verfahren zur Auflösung von Faserstoffen, insbesondere Altpapier, wobei die Faserstoffe einem Auflöseabschnitt einer rotierenden Trommel zugeführt und dort mit Wasser vermischt werden und die Faserstoffsuspension vom Auflöseabschnitt in einen Sortierabschnitt der Trommel geleitet wird, in dem eine Aufteilung in wenigstens eine Fein- und zumindest eine Grobfraktion erfolgt.

In bekannten und meist liegenden Trommeln wird in der Auflösezone das mit Wasser versetzte Altpapier durch Anheben, Rutschen und Fallen, bzw. Relativbewegungen der Stoffanteile zueinander, zerkleinert.
In der Sortierzone soll dann der gelöste Faserstoff von Unrat getrennt werden. Während die Feinfraktion die Perforation, d.h. die Sortieröffnungen der Trommel passiert, wird die Grobfraktion mit dem Unrat abgewiesen und separat als Grobfraktion aus der Trommel geführt.

Verfahren zur Behandlung von Altpapier, die mit solchen oder ähnlichen, beispielsweise in der EP 0 164 428 A1 oder der DE 32 21 788 C1 beschriebenen Trommeln arbeiten, haben den Vorteil einer besonders schonenden Auflösung, sowohl was empfindliche Fasersorten als auch sortierbar zu erhaltende, unerwünschte Begleitstoffe betrifft.

Allerdings sind die Faserverluste bei schwer auflösbaren Faserstoffen relativ hoch.

Stofflöser mit Rotoren ermöglichen zwar die Auflösung problematischer Faserstoffe, sind aber aggressiv und zerstören auch die Störstoffe.

Die Aufgabe der Erfindung ist es daher eine effiziente Auflösung von Faserstoffen, insbesondere Altpapier bei möglichst geringen Faserverlusten zu ermöglichen.

Erfindungsgemäß wurde die Aufgabe dadurch gelöst, dass der Sortierabschnitt mehrere axial nebeneinander liegende Sortierzonen besitzt, wobei sich die Größe der Sortieröffnungen benachbarter Sortierzonen unterscheidet, der Sortierabschnitt mit einer ersten Sortierzone mit kleineren Sortieröffnungen beginnt und die Feinfraktion der sich anschließenden zweiten Sortierzone mit im Hinblick auf die Sortieröffnungen der ersten Sortierzone größeren Sortieröffnungen in eine Nachauflösestufe geführt wird.
Wegen der unterschiedlich großen Sortieröffnungen unterscheiden sich auch die Feinfraktionen der Sortierzonen. Durch die größeren Sortieröffnungen gelangen so auch größere, schwer auflösbare Stoffe in die Feinfraktion. Dagegen bleiben sehr große Rejekte wie Planen, Tüten o.ä. in der Trommel. Zur Ermöglichung einer Variation der Größe von Sortieröffnungen, sollten insbesondere die Siebelemente der zweiten Sortierzone austauschbar gestaltet sein.
Im Interesse einer möglichst umfassenden Auflösung und damit auch geringer Faserverluste wird die Feinfraktion der zweiten Sortierzone vorzugsweise über eine Sedimentationseinheit in eine Nachauflösestufe geführt. Diese Nachauflösestufe ist zur Auflösung problematischer Faserstoffe geeignet und kann beispielsweise als Pulper, Scheibensortierer o.ä. ausgebildet sein.

Daneben weist die Nachauflösestufe auch eine Sortierfunktion auf, so dass die Faserstoffsuspension von der Nachauflösestufe in eine Fein- und eine Grobfraktion aufgeteilt wird. Der Betrieb der Nachauflösestufe ist kontinuierlich oder auch diskontinuierlich möglich.
Die Qualtität der Feinfraktion der Nachauflösestufe ist so gut, dass diese im Allgemeinen mit der Feinfraktion der ersten Sortierzone der Trommel zusammengeführt werden kann.
Die Grobfraktion der Nachauflösestufe wird zurück in den Sortierabschnitt der Trommel geleitet.

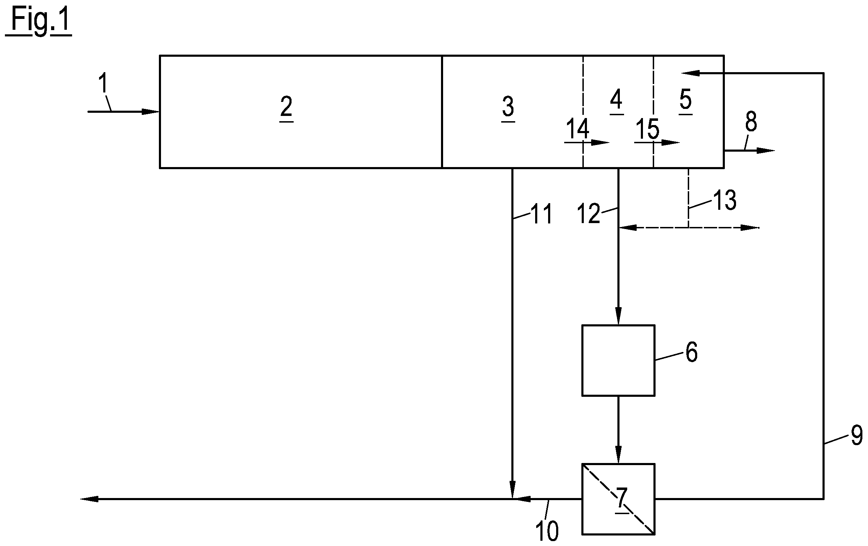

An die zweite Sortierzone mit größeren Sortieröffnungen schließt eine dritte Sortierzone mit wieder kleineren Sortieröffnungen an. In diese dritte Sortierzone wird dann die Grobfraktion der Nachauflösestufe geleitet. Diese dritte Sortierzone dient dem Auswaschen und Trocknen der Grobfraktion der Nachauflösestufe.
Die Grobfraktion der dritten Sortierzone wird als Rejekt aus der Trommel abgeführt, d.h. das Rejekt der Auflösung fällt nur an einer Stelle an.
Entsprechend den Anforderungen an die Qualität des Faserstoffs können alle Feinfraktionen der Sortierzonen getrennt in je einer Bütte gesammelt und weiterbehandelt werden. Es ist aber alternativ auch möglich die Feinfraktion der zweiten und dritten Sortierzone zusammenzuführen.
Auf diese Weise werden nur die schwer auflösbaren Faserstoffe einem intensiven Auflöseprozess in der Nachauflösestufe unterzogen, was den Aufwand minimiert und den relativ leicht auflösbaren Faserstoff schont. Das Ergebnis ist ein Minimum an Faserverlusten.
Nachfolgend soll die Erfindung an einem Ausführungsbeispiel näher erläutert werden. In der beigefügten Zeichnung zeigt die Figur ein erfindungsgemäßes Anlagenschema.
Die zylindrische Trommel ist normalerweise außen auf Rollen gelagert und wird über einen Antrieb in Rotation versetzt, wobei die Rotationsachse geringfügig geneigt zur Waagerechten verläuft.

Zur Auflösung des Altpapiers besitzt die Trommel hier an die linke Stirnseite angrenzend einen Auflöseabschnitt 2 mit einem Einlass. Im Auflöseabschnitt 2 wird der Faserstoff 1 in Form von relativ leicht auflösbarem Altpapier intensiv mit Wasser vermischt, wobei es infolge der Hebe-, Rutsch- und Fallbewegungen zu einer Zerkleinerung des aufgeweichten Papiermaterials kommt.

Um die Bewegung des Altpapiers sowie der dabei entstehenden Faserstoffsuspension zu unterstützen, besitzt die Trommel auf der Innenseite Hebeleisten o.ä. Einbauten. Solche Einbauten sind in vielfältiger Form bekannt und werden auf den jeweiligen Verwendungszweck abgestimmt.

Die bei dieser Auflösung entstehende Faserstoffsuspension hat eine Stoffdichte von ca. 18%.

Zwischen der hier rechten Stirnseite der Trommel und dem Auflöseabschnitt 2 befindet sich ein Sortierabschnitt, in dem die Faserstoffsuspension vom Auflöseabschnitt 2 geführt wird.

Die Abgrenzung beider Abschnitte erfolgt meist über einen radial außen verlaufenden Begrenzungsring in Form eines ringförmigen Bleches, welcher eine Stauwirkung hat und einen Sumpf bildet.

Im Unterschied zum Auflöseabschnitt 2 hat die zylindrische Trommel im Bereich des Sortierabschnitts eine Perforation, durch die Feinfraktionen 11,12,13 nach außen gelangen.

Die meist größeren Störstoffe werden von dieser Perforation in Form von Grobfraktionen 8,14,15 abgewiesen.

Oberhalb des Sortierabschnitts ist oft eine Sprüheinrichtung angeordnet, welche Wasser auf die Perforation richtet. Dies reinigt die Perforation und führt außerdem zu einer weiteren Verdünnung der Faserstoffsuspension innerhalb des Sortierabschnitts.

Erfindungsgemäß setzt sich der Sortierabschnitt hier aus drei axial nebeneinander angeordneten Sortierzonen 3,4,5 zusammen, wobei sich die Perforation benachbarter Sortierzonen 3,4,5 hinsichtlich der Größe der Sortieröffnungen unterscheidet.

Die erste, an den Auflöseabschnitt 2 angrenzende Sortierzone 3 hat Lochgrößen zwischen 8 und 20 mm Durchmesser. Über deren Perforation gelangt ein großer Teil der Faserstoffsuspension als Feinfraktion 11 aus der Trommel.

Die großen und insbesondere auch schwer auflösbaren Bestandteile gelangen als Grobfraktion 14 von der ersten in eine nachfolgende, zweite Sortierzone 4. Deren Perforation umfasst Löcher mit einem Durchmesser von mehr als 20 mm, vorzugsweise zwischen 30 und 100 mm.

Über diese relativ großen Löcher werden die bisher nicht aufgelösten Stippen als Feinfraktion 12 in eine Sedimentationseinheit 6 geleitet, in welcher Schwerteile aus der Feinfraktion 12 ausgeschleust werden.

Von der Sedimentationseinheit 6 werden die schwer auflösbaren Faserstoffe 1 dann in eine Nachauflösestufe 7 mit Sortierfunktion geführt.

Als Nachauflösestufe 7 eignet sich insbesondere ein Scheibensortierer oder ein Stofflöser, auch Pulper genannt, in dem die Faserstoffe 1 mit Hilfe eines Rotors mit Wasser vermischt und zumindest teilweise aufgelöst werden. Entscheidend sind hier die ausreichend hohen, vom Rotor ausgehenden Scherkräfte.

Während die Feinfraktion 10 der Nachauflöseeinheit 7 durch ein Sieb unter bzw. über dem Rotor abgezogen wird, erfolgt die Entfernung der Grobfraktion 9 seitlich vom Sieb.

Über den Rotor geschieht die Auflösung wesentlich intensiver, aber auch aggressiver, was zur Zerstörung der Rejekte führt.

Meist ist die Qualität der Feinfraktion 10 der Nachauflöseeinheit 7 so gut, dass diese mit der Feinfraktion 11 der ersten Sortierzone 3 zusammengeführt und gemeinsam weiterbehandelt werden kann.

Demgegenüber wird die Grobfraktion 9 der Nachauflösestufe 7, vorzugsweise diskontinuierlich in den Sortierabschnitt der Trommel geleitet.

Hierzu besitzt der Sortierabschnitt am Ende der Trommel eine dritte Sortierzone 5 mit einer Perforation, deren Löcher einen Durchmesser von maximal 12 mm aufweisen. In diese dritte Sortierzone 5 werden die Grobfraktion 15 der zweiten Sortierzone 4 sowie die Grobfraktion 9 der Nachauflösestufe 7 geführt. In dieser dritten Sortierzone 4 soll vor allem die Grobfraktion 9 der Nachauflösestufe 7 ausgewaschen und teilentwässert werden.

Die Feinfraktion 13 der dritten Sortierzone 5 kann gemeinsam mit der Feinfraktion 12 der zweiten Sortierzone 4 zur Sedimentationseinheit 6 geleitet werden. Alternativ ist aber auch eine separate Weiterbehandlung der Feinfraktion 13 der dritten Sortierzone 5 möglich.

Die Grobfraktion 8 der dritten Sortierzone 5 wird als Rejekt aus der Trommel abgeführt. Dies bedeutet, dass es nur eine Anfallstelle für das gesamte Rejekt gibt.

Auf diese Weise können die Faserverluste selbst bei Vorhandensein schwer auflösbarer Faserstoffe mit begrenztem Aufwand erheblich vermindert werden.

## Patentansprüche

1. Verfahren zur Auflösung von Faserstoffen (1), insbesondere Altpapier, wobei die Faserstoffe (1) einem Auflöseabschnitt (2) einer rotierenden Trommel zugeführt und dort mit Wasser vermischt werden und die Faserstoffsuspension vom Auflöseabschnitt (2) in einen Sortierabschnitt der Trommel geleitet wird, in dem eine Aufteilung in wenigstens eine Fein- (11,12,13) und zumindest eine Grobfraktion (8,14,15) erfolgt, wobei der Sortierabschnitt mehrere axial nebeneinander liegende Sortierzonen (3,4,5) besitzt, sich die Größe der Sortieröffnungen benachbarter Sortierzonen (3,4,5) unterscheidet, der Sortierabschnitt mit einer ersten Sortierzone (3) mit kleineren Sortieröffnungen beginnt, die Feinfraktion (12) der sich anschließenden zweiten Sortierzone (4) mit größeren Sortieröffnungen in eine Nachauflösestufe (7) geführt wird und die Nachauflösestufe (7) eine Aufteilung in eine Fein- (10) und eine Grobfraktion (9) vornimmt, **dadurch gekennzeichnet, dass** sich an die zweite Sortierzone (4) mit größeren Sortieröffnungen eine dritte Sortierzone (5) mit kleineren Sortieröffnungen anschließt und die Grobfraktion (9) der Nachauflösestufe (7) in die dritte Sortierzone (5) der Trommel geleitet wird.

2. Verfahren nach Anspruch 1, **dadurch gekennzeichnet, dass** die Feinfraktion (10) der Nachauflösestufe (7) mit der Feinfraktion (11) der ersten Sortierzone (3) der Trommel zusammengeführt wird.

3. Verfahren nach einem der vorhergehenden Ansprüche, **dadurch gekennzeichnet, dass** die Sortieröffnungen als Löcher ausgebildet sind und der Lochdruchmesser in der zweiten Sortierzone (4) über 20 mm, vorzugsweise zwischen 30 und 100 mm liegt.

4. Verfahren nach einem der vorhergehenden Ansprüche, **dadurch gekennzeichnet, dass** die Grobfraktion (8) der dritten Sortierzone (5) als Rejekt aus der Trommel abgeführt wird.

5. Verfahren nach einem der vorhergehenden Ansprüche, **dadurch gekennzeichnet, dass** die Feinfraktion (12) der zweiten Sortierzone (4) über eine Sedimentationseinheit (6) zur Nachauflösestufe (7) geführt wird.

6. Verfahren nach einem der vorhergehenden Ansprüche, **dadurch gekennzeichnet, dass** alle Feinfraktionen (11,12,13) der Sortierzonen (3,4,5) getrennt weiterbehandelt werden.

7. Verfahren nach einem der Ansprüche 1 bis 5, **dadurch gekennzeichnet, dass** die Feinfraktionen (12,13) der zweiten (4) und dritten (5) Sortierzone zusammengeführt werden.

## Claims

1. Method for pulping fibrous materials (1), in particular waste paper, the fibrous materials (1) being fed to a pulping section (2) of a rotating drum and being mixed there with water, and the fibrous stock suspension being conducted from the pulping section (2) into a sorting section of the drum, in which a separation takes place into at least one fine fraction (11, 12, 13) and at least one coarse fraction (8, 14, 15), the sorting section having a plurality of sorting zones (3, 4, 5) which lie axially next to one another, the size of the sorting openings of adjacent sorting zones (3, 4, 5) differing, the sorting section beginning with a first sorting zone (3) with relatively small sorting openings, the fine fraction (12) of the adjoining second sorting zone (4) with relatively large sorting openings being conducted into a secondary pulping stage (7), and the secondary pulping stage (7) performing a separation into a fine fraction (10) and a coarse fraction (9), **characterized in that** the second sorting zone (4) with relatively large sorting openings is adjoined by a third sorting zone (5) with relatively small sorting openings, and the coarse fraction (9) of the secondary pulping stage (7) is conducted into the third sorting zone (5) of the drum.

2. Method according to Claim 1, **characterized in that** the fine fraction (10) of the secondary pulping stage (7) is combined with the fine fraction (11) of the first sorting zone (3) of the drum.

3. Method according to either of the preceding claims, **characterized in that** the sorting openings are configured as holes, and the hole diameter in the second sorting zone (4) lies above 20 mm, preferably between 30 and 100 mm.

4. Method according to one of the preceding claims, **characterized in that** the coarse fraction (8) of the third sorting zone (5) is discharged from the drum as reject material.

5. Method according to one of the preceding claims, **characterized in that** the fine fraction (12) of the second sorting zone (4) is conducted via a sedimentation unit (6) of the secondary pulping stage (7) .

6. Method according to one of the preceding claims, **characterized in that** all the fine fractions (11, 12, 13) of the sorting zones (3, 4, 5) are subjected to further treatment separately.

7. Method according to one of Claims 1 to 5, **characterized in that** the fine fractions (12, 13) of the second (4) and third (5) sorting zone are combined.

## Revendications

1. Procédé de dissolution de matières fibreuses (1), en particulier de vieux papier, dans lequel on charge les matières fibreuses (1) dans une section de dissolution (2) d'un tambour rotatif et on les y mélange avec de l'eau, et on conduit la suspension de matières fibreuses de la section de dissolution (2) à une section de tri du tambour, dans laquelle on opère un partage en au moins une fraction fine (11, 12, 13) et au moins une fraction grossière (8, 14, 15), dans lequel la section de tri comporte plusieurs zones de tri (3, 4, 5) situées axialement l'une à côté de l'autre, la grandeur des orifices de tri de zones de tri voisines (3, 4, 5) est différente, la section de tri commence avec une première zone de tri (3) avec de plus petits orifices de tri, on envoie la fraction fine (12) de la deuxième zone de tri qui suit (4) avec de plus grands orifices de tri dans un étage de dissolution suivant (7) et l'étage de dissolution suivant (7) opère un partage en une fraction fine (10) et une fraction grossière (9), **caractérisé en ce qu'**une troisième zone de tri (5) avec de plus petits orifices de tri se raccorde à la deuxième zone de tri (4) avec de plus grands orifices de tri et on conduit la fraction grossière (9) de l'étage de dissolution suivant (7) dans la troisième zone de tri (5) du tambour.

2. Procédé selon la revendication 1, **caractérisé en ce que** l'on rassemble la fraction fine (10) de l'étage de dissolution suivant (7) avec la fraction fine (11) de la première zone de tri (3) du tambour.

3. Procédé selon l'une quelconque des revendications précédentes, **caractérisé en ce que** les orifices de tri sont réalisés en forme de trous et le diamètre de trou dans la deuxième zone de tri (4) se situe au-dessus de 20 mm, de préférence entre 30 et 100 mm.

4. Procédé selon l'une quelconque des revendications précédentes, **caractérisé en ce que** l'on évacue la fraction grossière (8) de la troisième zone de tri (5) sous forme de rejet hors du tambour.

5. Procédé selon l'une quelconque des revendications précédentes, **caractérisé en ce que** l'on conduit la fraction fine (12) de la deuxième zone de tri (4) via une unité de sédimentation (6) à l'étage de dissolution suivant (7).

6. Procédé selon l'une quelconque des revendications précédentes, **caractérisé en ce que** l'on retraite séparément toutes les fractions fines (11, 12, 13) des zones de tri (3, 4, 5).

7. Procédé selon l'une quelconque des revendications 1 à 5, **caractérisé en ce que** l'on rassemble les fractions fines (12, 13) des deuxième (4) et troisième (5) zones de tri.
